# EUROPEAN PATENT SPECIFICATION

(11) **EP 0 581 718 B1**
(45) Date of publication and mention of the grant of the patent: **30.09.1998**
(21) Application number: 93500041.4
(22) Date of filing: 13.04.1993
(51) Int. Cl.: F17C 13/04

(54) **Improved throttling regulator for liquefied gas bottles**
Verbesserte Drosselregler für Flüssiggasflaschen
Régulateur d'étranglement perfectionné pour bouteilles à gas liquifié

(30) Priority: 14.04.1992 ES 9201196
(43) Date of publication of application: 02.02.1994
(73) Proprietor: REPSOL-BUTANO, S.A., E-28036 Madrid (ES)
(72) Inventor: Vela Lumbreras, Antonio, E-28033 Madrid (ES); Antunez Jimenez, José, E-28028 Madrid (ES)
(74) Representative: Riera Blanco, Juan Carlos

(56) References cited:
- DE-A- 2 009 220
- DE-A- 2 036 331
- FR-A- 2 243 382
- FR-A- 2 520 487

## Description

### BACKGROUND OF THE INVENTION

The present specification refers to an improved pressure regulator for liquefied gas bottles, the evident aim of which is to constitute a quick coupling to a bottle through a direct connection with a valve incorporated therein, disposing of a regulation chamber formed by the upper part of the valve and the lower part of the regulator, the adjusting of same being performed through a self-closing shutter of the - valve in question.

The regulator ensures, in a rest position, through a spring under pressure, that the stem does not act on the gas throttling opening of the valve incorporated in the bottle.

### FIELD OF THE INVENTION

This invention applies to the industry belonging to the manufacture of gas regulators.

### BACKGROUND OF THE INVENTION

Patent document DE-A-2 036 331 is known to provide a pressure regulator for extracting gas from cylinders containing pressurised liquefied gas, preferably propane or butane, fitted with a top knob driven by the user, being internally associated to a shaft travelling vertically, turning of said knob therefore causing said shaft to travel, its lower face being envisaged as a pushing area for a controlling spigot whose lower end acts upon pressurised gas cylinder shutting means, and moving against a spring bias. The spigot head is enlarged and housed in a bore made in said shaft, the spigot moreover having sealing means at an intermediate area to shut or open communication, depending on its position, between the cylinder valve outlet and the regulating chamber of said regulator, said chamber being upwardly delimited by a regulation member joined to said travelling shaft.

This arrangement, costly to construct, has been materially improved by the regulator of this invention wherein the driving and controlling members are wholly independent of the membrane delimiting the regulator chamber and wherein said regulation chamber communicates directly with both the cylinder valve and the outlet nozzle.

### SUMMARY OF THE INVENTION

The improved pressure regulator for liquefied gas bottles, as proposed by the invention, constitutes per se an evident improvement in its use by an user, and, at the same time, has peculiar characteristics making it possible, endowing it with a greater safety than the conventional regulators used up to now.

In a more definite way, the improved pressure regulator for liquefied gas bottles constitutes a unit in which there are two perfectly differentiated parts operating according to a total independence, i.e.:
- A quick coupling to the valve.
- The user can regulate the use presure.
- The coupling to the valve constitutes a connection between the regulator and the valve, this connection being made by the user, lifting with his/her hands a plastic ring and placing the unit on a valve incorporated into a bottle, and carrying out then the insertion of same by pressing the ring towards the lower zone, so that the fixing balls provided become inserted into a housing specially arranged in the valve for this purpose.

The regulation of the gas pressure by the user is performed in a chamber located between the tightening ring of the valve and the regulator membrane, the tightness of which is ensured by the pressure exerted on it by a fastener, which, in turn, is united to the lower body of a flanging arranged at an appropiate zone.

In order to place the regulator at work, it is necessary to rotate anticlockwise a knob located at the upper part, and then a spindle descends a nut which is guided by ribs, displacing a spring which pushes the stem so that, in its displacement, it comes into contact with a shutter located at the upper and center part of the valve, with which the gas pressure opens, so obtaining a pressure balance which is proportional to the pressure - exerted as said spring is compressed.

In order to put this regulator in a resting position, the - mentioned knob is rotated clockwise, so making the spring pressure to descend, and lastly, by means of a second spring, the unit will be placed in a resting position, the emerging stem being in contact with the lower part of the spindle.

### BRIEF DESCRIPTION OF THE DRAWINGS

In order to complement this description and to aid to a better understanding of the features of this invention, the accompanying drawings, which are a part of the present specification, show, in an illustrative and non limitative manner, the following

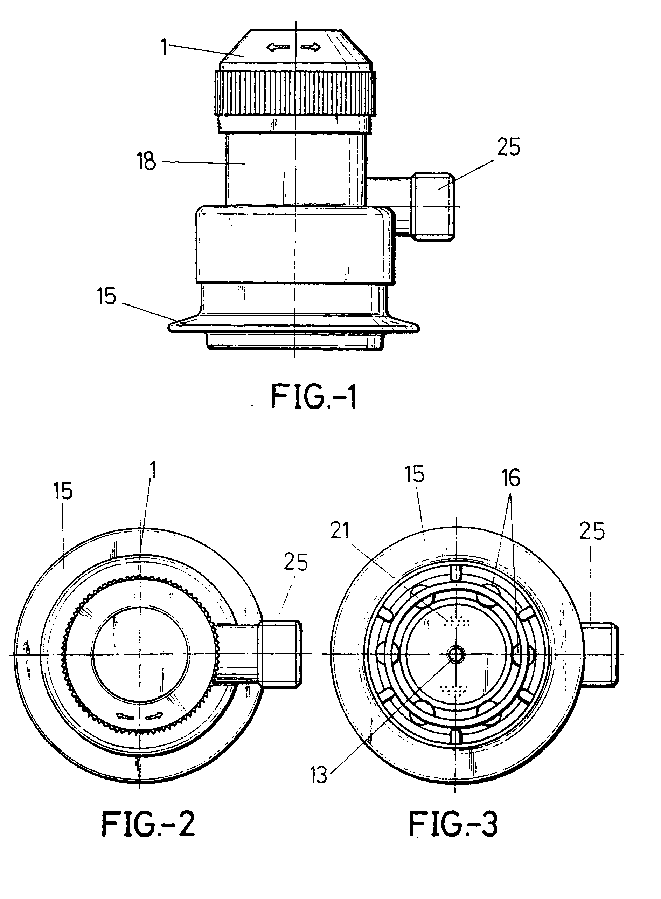

Figure 1 shows a side elevational vew of the improved pressure regulator for liquefied gas bottles of the invention.

Figure 2 shows a plan view of the upper part of the object illustrated in Fig. 1.

Figure 3 shows a plan view of the lower part of the object illustrated in the preceding figures.

Figure 4 shows, lastly, a side elevational view, duly sectioned, of the object of the invention.

### DETAILED DESCRIPTION OF THE INVENTION

From these figures, it can be seen that the improved pressure regulator for liquefied gas bottles, which is the object of the present invention, is constituted as a variable pressure regulator, consisting of a main body 18, made of a zamak alloy.

The regulator has a cover 4 made of a material similar to that of the main body, and a ring 15, made of acetalic resin, intended for permitting a ball connection and a adjusting knob 1 intended for allowing the user toopen, adjust and close the gas passing.

At its lower part, the main body has a housing where the valve is located, which, of course, is incorporated in the upper part of the bottle so that the tightening ring of same carries out the closing at the point referenced as 22.

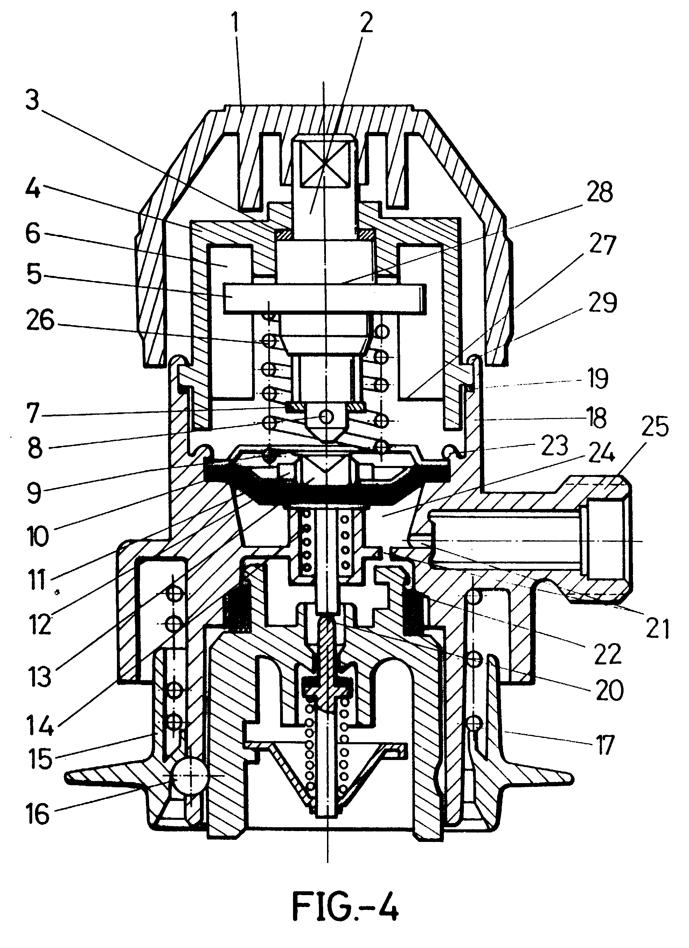

Upwards, in Fig. 4 it can be seen the existence of a movable shank joined with a membrane 10 by means of a plate 12 and a nut 11, the whole being joined in common.

The whole assembly is fixed to the body by means of a fastener 9, which is retained by projections 23, exerting pressure on membrane 10, with which an appropiate tightness is obtained at the contact point.

In the rest position, a spring 14 pushes the assembly, not allowing the movable shank 13 to contact with the shutter 20.

The space between the tightening ring of the valve and the before mentioned point constitutes a regulation chamber 24, which communicates, through an orifice 21 and a nozzle 25, with the consumption device.

The independent operation of the control unit starts from a spring 26 which is pushed by a nut 5 which, in turn, is guided by means of ribs 6 and 27, its travel being limited by a whasher 7 and a pin 8.

These elements are arranged on a spindle 2 having a limited - travel in its upward zone 28 of said spindle 2, which, in turn, in housed in the cover 4, both resting on a running washer 3 allowing the control unit to smoothly slide.

Said knob 1 is housed in a spindle having two paralel faces and a groove in which two resilient ribs are inserted to radiallly and axially fix said knob 1.

This assembly features the circumstance that both at the limit of the upper travel and at the limit of the lower travel, the pressures created act only on the speindle assembly, without affecting other elements, so constituting, as a result, a floating system.

The cover 4 is fixed to the body 18 by means of a locking at the zone 29 through a joint 19.

It is to be noted that the more important characteristics of this regulator lie in the opening spindle on the valve shutter, which is normally closed save in the case that the regulation spring acts on it, becoming, as a result of this positioning, in a work situation.

The control system, as above mentioned, is a floating one, with which a light operation is obtained and it achieves a direct pressure of the nut on no element outside the spindle and the regulation spring.

It is obvious that this regulator means a full isolation of the gas chamber and the regulation system, which ensures that any outer shock on the assembly affects the tightness of the regulation chamber.

As already said in the description of the invention, the connection of the regulator to the valve is achieved by lifting,with both hands, the plastic ring 15 and putting the regulator assembly on the valve by introducing into it and pressing then the - ring toward the lower zone, so that the fixing balls 16 insert into the housing provided for this purposed in the valve.

The regulation of the working gas pressure is achieved within a regulation chamber 24 which is located between the tightening ring of the closing valve 22 and the regulator membrane 10, the tightness of which is ensured by the pressure exerted on same by the fastener 9 which, in turn, is united to the lower body 18 by a projection located at the zone referenced as 23.

The regulator has an orifice on it, referenced as 21, which allows the gas to pass, as well as some auxiliary elements referenced as 17, in order to contribute to a good performance of the assembly.

To position the regulator into a work position, the user will, through the knob 1, rotate this anticlockwise, with which the spindle 2 will descend the nut 5, which, in turn, is guided by ribs 6 and 27, displacing the spring 26 which pushes the movable shank 13 so that, in its displacement, it contacts the shutter 30 of the valve, so opening the gas passage, establishing a pressure balance which will be proportional to that created as said spring 26 compresses.

To obtain a resting position, the user will operate inversely, rotating the knob 1 clockwise, so obtaining that the spring pressure 6 yields and becomes lastly put into a resting position by means of the spring 14, achieving the contact between the movable shank 13 and the lower part of the spindle 2.

It is not considered necessary to extend more this description for an expert in the art to understand the scope of the invention and the advantages derived from it.

The materials, shape, size and arrangement of the elements are open to variation, provided that it does not imply any alteration to the essence of the invention.

The terms under which this specification has been described should be taken in an ample and non limitative sense.

## Claims

1. An improved pressure regulator for liquefied gas bottles adaptable by means of a ball connection to a pressurized gas container valve, provided with an external knob (1) for user opening, adjustment and closing of the gas flow, also provided with an outlet nozzle (25) internally connected to a regulating chamber (24) defined inside the regulator and externally adapted for connection to a consumer device, said regulator being furthermore provided with a movable shank (13) acting via its lower end on a valve in the pressurized gas container and in which a membrane (10) is fitted for dividing the inner space in two separate chambers, characterized in that said movable shank (13) consists of an independent element separated from the adjustment means and secured to said inner space dividing membrane (10) in such a manner that a portion of said shank lies above said membrane (10), facing the actuating and control means, while another portion of the shank lies underneath said membrane (10), its end facing the container gas outlet valve; whereby said membrane (10) incorporates a plate (12) on its upper face which is kept in place by means of a nut (11) associated to said shank (13), and whereby a plate (9), associated to membrane (10), has been provided, its perimeter edges being superimposed on those of said membrane for fastening through projections (23) of the body (18) which extend inwards.

2. A pressure regulator according to claim 1, characterized in that the adjustment and control means which are manually activated via the external button (1) comprise a spindle fitted with a nut movable against the action of a spring (26), said nut being guided along its movement by means of side ribs (6, 27), the movement of the nut (5) being limited downwards by a washer (7) and a pin (8), said spring (26) being required to exert a biasing action, as nut (5) descends, over membrane (10), thereby offsetting the shank (13) for activating the gas outlet shutter (20).

3. A pressure regulator according to claims 1 and 2, characterized in that it further comprises a spring (14) lodged on the lower portion of shank (13), said spring (14) being required to recover the assembly when pressure on membrane (10) ceases, thus allowing the gas container valve to close.

4. A pressure regulator according to claims 1 and 3, characterized in that said regulation chamber (24) located under said membrane (10) is in direct communication with the gas container outlet valve through an access hole (21).

## Patentansprüche

1. Verbesserter Druckregler für Flüssiggasflaschen, der über eine Kugelverbindung an ein Ventil eines unter Druck stehenden Gasbehälters angeschlossen werden kann und der mit einem äusseren Griff (1) versehen ist, damit der Benutzer den Gasfluss öffnen, einstellen und schliessen kann, und der ausserdem mit einer Ausgangsdüse (25) versehen ist, die innen an eine innerhalb des Reglers vorgesehene Regelkammer (24) angeschlossen ist und aussen für ihren Anschluss an eine Verbrauchervorrichtung vorgesehen ist, wobei der genannte Regler ausserdem mit einem beweglichen Griff (13) versehen ist, der über ein unteres Ende auf ein Ventil im unter Druck stehenden Gasbehälter wirkt, und in dem eine Membran (10) angebracht wird, um den Innenraum in zwei getrennte Kammern zu teilen, dadurch gekennzeichnet, dass der genannte bewegliche Griff (13) aus einem unabhängigen Element besteht, das vom Einstellmittel getrennt ist und am genannten Innenraum befestigt ist, welcher die Membran (10) so unterteilt, dass ein Teil des genannten Griffs auf der genannten Membran (10) aufliegt, die in Richtung des Steuer- und Betätigungsmittels zeigt, während der andere Teil des Griffs unter der genannten Membran (10) aufliegt, wobei sein Ende gegen das Gasaustrittsventil des Behälters zeigt, dass die genannte Membran (10) eine Platte (12) auf ihrer Oberseite aufweist, die mittels einer mit dem genannten Griff (13) verbundenen Mutter (11) auf ihrem Platz gehalten wird, und dass eine Platte (9) vorgesehen ist, die mit der Membran (10) verbunden ist, wobei ihre Umfangsränder auf denen der genannten Membran aufliegen, um die Vorsprünge (23) des sich nach innen erstreckenden Körpers (18) quer zu befestigen.

2. Druckregler nach Anspruch 1, dadurch gekennzeichnet, dass das Steuer- und Einstellmittel, das mittels des äusseren Griffs (1) von Hand betätigt wird, aus einer Achse besteht, die mit einer Mutter angeordnet ist, welche gegen die Kraft einer Feder (26) bewegbar ist, wobei die genannte Mutter auf ihrer ganzen Bewegungsstrecke mit Hilfe von seitlichen Rippen (6, 27) geführt wird, und die Bewegung der Mutter (5) nach unten mit einer Auflagescheibe (7) und einem Stift (8) begrenzt wird, wobei gewünscht ist, dass die genannte Feder (26) eine Verschiebungskraft auf die Membran (10) ausübt, wenn sich die Mutter (5) nach unten bewegt, und auf diese Weise den Griff (13) verschiebt, um den Verschluss (20) für den Austritt des Gases zu betätigen.

3. Druckregler nach den Ansprüchen 1 und 2, dadurch gekennzeichnet, dass dieser ausserdem eine Feder (14) aufweist, die auf dem unteren Teil des Griffs (13) lagert, wobei die genannte Feder (14) notwendig ist, um die Vorrichtung in die Ausgangslage zurückzubringen, wenn der auf die Membran (10) ausgeübte Druck aufhört, und auf diese Weise zu ermöglichen, dass sich das Ventil des Gasbehälters schliesst.

4. Druckregler nach den Ansprüchen 1 und 3, dadurch gekennzeichnet, dass die genannte Regelkammer (24), die unter der genannten Membran (10) liegt, über eine Zugangsöffnung (21) direkt mit dem Ausgangsventil des Gasbehälters verbunden ist.

## Revendications

1. Un régulateur de pression amélioré pour des bouteilles de gaz liquéfié adaptable au moyen d'une connexion de billes à une valve d'un conteneur de gaz pressurisé, pourvu d'une commande (1) externe pour que l'usager ouvre, règle et ferme le flux de gaz, pourvu, en plus, d'une tuyère (25) de sortie connectée internement à une chambre (24) de régulation définie à l'intérieur du régulateur et adaptée à l'extérieur pour sa connexion à un dispositif du consommateur; le dit régulateur étant muni, de façon additionnelle, d'un manche (13) mobile qui agit au moyen d'une extrémité inférieure sur une valve dans le conteneur de gaz pressurisé et dans lequel s'adapte une membrane (10) pour diviser l'espace intérieur en deux chambres séparées, caractérisé en ce que le dit manche (13) mobile se compose d'un élément indépendant séparé du moyen de réglage et fixé au dit espace intérieur qui divise la membrane (10) de telle façon qu'une partie du dit manche repose sur la dite membrane (10), en étant orienté vers le moyen de contrôle et d'actionnement, alors qu'une autre partie du manche repose par dessous la dite membrane (10) , son extrémité étant orientée vers la valve de sortie du gaz du conteneur; où la dite membrane (10) incorpore une plaque (12) sur sa superficie supérieure, qui se maintient à sa place au moyen d'un écrou (11) associé au dit manche (13), et où a été proportionné une plaque (9), associée à une membrane (10), ses bords du périmètre étant superposés sur ceux de la dite membrane pour fixer transversalement les sortants (23) du corps (18) qui s'étend vers l'intérieur.

2. Un régulateur de pression conformément à la revendication 1, caractérisé en ceci que le moyen de contrôle et de réglage, qui s'active manuellement au moyen du manche (1) externe, est composé de l'action d'un ressort (26), le dit écrou étant guidé tout au long de son mouvement au moyen de nerfs latéraux (6, 27), le mouvement de l'écrou (5) étant limité vers le bas au moyen d'une rondelle (7) et d'une cheville (8), qui font que le dit ressort (26) exerce une action de déviation, lorsque l'écrou (5) descend, sur la membrane (10), en déviant de cette façon le manche (13) pour actionner l'obturateur (20) de sortie du gaz.

3. Un régulateur de pression conformément aux revendications 1 et 2, caractérisé en ceci qu'il est composé, en plus, d'un ressort (14) logé sur la partie inférieure du manche (13), le dit ressort (14) étant nécessaire pour récupérer l'installation lorsque la pression sur la membrane (10) cesse, en permettant ainsi que la valve du conteneur de gaz se ferme.

4. Un régulateur de pression conformément aux revendications 1 et 3, caractérisé en ceci que la dite chambre (24) de régulation localisée par en dessous de la dite membrane (10) est en communication directe avec la valve de sortie du conteneur de gaz à travers un orifice (21) d'accès.
